Europäisches Patentamt

European Patent Office

Office européen des brevets

(19)

(11) Numéro de publication: **0 145 603**
**B1**

(12) **FASCICULE DE BREVET EUROPÉEN**

(45) Date de publication du fascicule du brevet:
**27.04.88**

(21) Numéro de dépôt: **84402547.8**

(22) Date de dépôt: **11.12.84**

(51) Int. Cl.⁴: **B 29 C 39/10, A 44 B 18/00**

(54) **Bande d'accrochage destinée à être fixée en cours de moulage sur un article à mouler, et son procédé de fixation.**

(30) Priorité: **13.12.83 FR 8319926**
**26.06.84 FR 8410033**

(43) Date de publication de la demande:
**19.06.85 Bulletin 85/25**

(45) Mention de la délivrance du brevet:
**27.04.88 Bulletin 88/17**

(84) Etats contractants désignés:
**DE GB IT**

(56) Documents cité:
**FR-A-1 601 166**
**FR-A-2 405 123**
**FR-A-2 423 666**
**FR-A-2 463 870**
**FR-A-2 466 330**
**US-A-3 870 741**

(73) Titulaire: **APLIX, 75bis, avenue Marceau, F-75116 Paris (FR)**

(72) Inventeur: **Billarant, Patrick, 7213 Baltusrol Lane, Charlotte North Carolina (US)**
Inventeur: **Queval, Bruno, 839 Scarleybark Road, Charlotte, North Carolina (US)**

(74) Mandataire: **Coutel, Jean- Claude, Cabinet AYMARD & COUTEL 20, rue Vignon, F-75009 Paris (FR)**

## Description

L'invention est relative à la fixation d'une bande, notamment un ruban auto-agrippant, munie sur une face d'éléments d'accrochage, sur un article à mouler auquel elle adhère, par son autre face, lors de l'opération de moulage elle-même.

Plus particulièrement, l'invention concerne la fixation d'une bande de ce type sur un article moulé en mousse, par exemple une assise ou un dossier de siège d'automobile, cette bande étant destinée à retenir, par sa face extérieure munie d'éléments d'accrocbage, un article muni d'éléments d'accrochage complémentaires, notamment un revêtement du genre housse.

L'invention concerne également une bande auto-grippante destinée à être fixée en cours de moulage sur un article à mouler.

De façon connue, lórsqu'il s'agit d'assujettir une telle bande à l'article lors du moulage de celui-ci, on dispose préalablement la bande à l'intérieur du moule, contre la surface intérieure de la cavité de moulage, à laquelle elle adhère temporairement.

Le maintien en place de la bande avant et pendant l'opération de moulage est assuré, de façon satisfaisante, par des moyens variés tels qu'un collage provisoire (FR-A-2 405 123) ou encore une retenue magnétique ou mécanique (FR-A-2 423 666).

Par contre, une difficulté non encore résolue de façon pleinement satisfaisante consiste à éviter que le produit de moulage, avant sa mise en forme physique et chimique finale, ne se glisse entre la surface intérieure du moule et la bande elle-même pour venir intéresser les éléments d'accrochage tournés vers l'extérieur du moule et se répandre et se fixer entre eux, en inhibant ainsi leur pouvoir d'accrochage.

L'invention a principalement pour but de résoudre cette difficulté de façon techniquement et économiquement satisfaisante.

A cet effet, la bande selon l'invention destinée à être fixée en cours de moulage sur un article à mouler, cette bande comportant une semelle dont une face porte des éléments d'accrochage tournée vers l'extérieur du moule, et la bande prenant appui sur la surface intérieure du moule le long d'une zone marginale périphérique dépourvue d'éléments d'accrochage, est caractérisée par le fait qu'elle porte, entre la surface intérieure du moule et sa semelle portant lesdits éléments d'accrochage, une fine pellicule provisoire de protection continue qui recouvre les éléments d'accrochage et qui s'étend jusqu'à ladite zone marginale pour définir un espace fermé et étanche de protection desdits éléments pendant le moulage.

De préférence, le bord de la pellicule de protection est en retrait par rapport au bord extrême de ladite semelle de la bande, de manière que ladite semelle puisse être collée directement sur la surface intérieure du moule.

De préférence encore, la bande est allongée et, sur ses deux petits côtés terminaux, elle reçoit et retient le bord correspondant de la pellicule de protection par un collage, notamment par soudure ultrasonique, les éléments d'accrochage étant, dans cette zone, écrasés entre ladite face et ladite pellicule.

Selon l'invention, un procédé particulier pour la fixation d'une telle bande, en cours de moulage, sur l'article à mouler est caractérisé par le fait qu'il consiste à placer dans la cavité de moulage la bande équipée de la pellicule de protection, à réaliser l'opération de moulage à une température qui n'affecte pas la pellicule de protection, et à supprimer celle-ci après que le produit de moulage s'est stabilisé chimiquement et physiquement.

Suivant un premier aspect du procédé, la pellicule de protection est en une matière qui se dégrade à une température supérieure à celle a partir de laquelle le produit de moulage se stabilise, et par le fait que l'on chauffe progressivement pendant le moulage, de sorte que, tant que le produit de moulage est encore fluide, il ne peut s'insérer entre ladite semelle de la bande et la pellicule de protection non dégradée et que, après que le produit s'est stabilisé, la pellicule se dégrade et disparaît au moins partiellement sous l'effet de l'augmentation de température pour découvrir lesdits éléments d'accrochage.

La nature de la pellicule de protection est choisie en fonction des caractéristiques du produit de moulage.

Ainsi, selon un mode d'application préféré, dans lequel l'article moulé est en mousse obtenue à froid, c'est-à-dire une mousse se stabilisant à partir d'environ 50°C, par exemple en polyéther, on pourra utiliser une pellicule en polyoléfine, notamment un polyéthylène souple ou rigide, qui se dégrade a partir de 100°C, ou encore en acétate de cellulose qui se dégrade à partir de 60°C.

La pellicule de protection est très fine, de l'ordre de quelques centièmes de millimètres, par exemple 2/100 mm, et elle se dégrade par rétraction, de sorte que les produits de dégradation occupent un volume très faible et sont incapables, même en venant s'insérer entre les éléments d'accrochage, d'en diminuer de façon appréciable le pouvoir accrochant.

La destruction thermique de la pellicule de protection peut se faire soit dans le cycle de moulage, dans la phase terminale de celui-ci, soit après le moulage, c'est-à-dire après que le produit moulé a été retiré du moule et, éventuellement, s'est refroidi, la destruction se faisant dans ce cas par exemple à l'aide d'un chauffage bref et vif à la flamme.

Selon un second aspect du procédé, la pellicule provisoire de protection est collée par ses bords au moins sur les zones marginales longitudinales de la face de la semelle portant les éléments d'accrochage, ces zones étant exemptes desdits éléments et la pellicule pouvant être simplement détachée de ladite face après le moulage pour dégager les éléments d'accrochage.

Le détachement de la pellicule peut se faire soit par décollement, soit par division de la pellicule à sa jonction entre ses parties collées et le reste de la pellicule, cette division pouvant être obtenue par arrachement ou par découpe.

Le collage initial de la pellicule peut se faire soit à l'aide d'un adhésif d'apport, soit par action physicochimique, notamment par soudage aux ultrasons avec écrasement des éléments d'accrochage dans les zones de collage.

Avantageusement on interpose, entre la partie centrale non collée de la pellicule et le sommet des éléments d'accrochage qu'elle recouvre, un feuillard relativement rigide, par exemple métallique. Ce feuillard a pour rôle, d'une part, de raidir l'ensemble composite constitué par la bande et la pellicule pour son insertion dans le moule et, d'autre part, de faciliter le détachement de la pellicule après le moulage en servant d'élément de préhension et de poussée de la pellicule. Un autre rôle du feuillard, quand il est en matière magnétique, est d'assurer le maintien de la bande dans le moule à l'aide d'aimants prévus dans celui-ci.

Avantageusement, la pellicule est également collée, de la même façon, sur les extrémités transversales de la bande.

Le procédé pour la fixation de la bande ci-dessus sur un article à mouler sans destruction thermique de la pellicule de protection consiste :

- à coller par ses bords la pellicule provisoire de protection au moins sur les zones marginales longitudinales de la face de la semelle portant les éléments d'accrochage, ces zones étant exemptes desdits éléments ;

- à assujettir la bande ainsi protégée dans le moule;

- à réaliser l'opération de moulage ;

- à enlever du moule l'ensemble constitué par le produit moulé et la bande qui y est fixée; et

- à détacher la pellicule de ladite face de la bande pour dégager les éléments d'accrochage.

On comprendra bien l'invention à la lecture de la description qui va suivre et en référence aux dessins annexés dans lesquels :

Fig. 1 est une vue en coupe transversale d'une bande selon un premier mode de réalisation de l'invention ;

Fig. 2 est une coupe longitudinale arrachée des extrémités de la bande de la Fig. 1 ;

Fig. 3 est une vue analogue à la Fig. 1 et montre la bande assujettie à la face intérieure du moule, avant moulage ;

Fig. 4 est une vue analogue à la Fig. 1 et montre l'article moulé fini qui porte la bande de retenue d'un revêtement ; et

Fig. 5 à 8 sont des vues analogues respectivement aux Figs. 1 à 4 relativement à un second mode de réalisation.

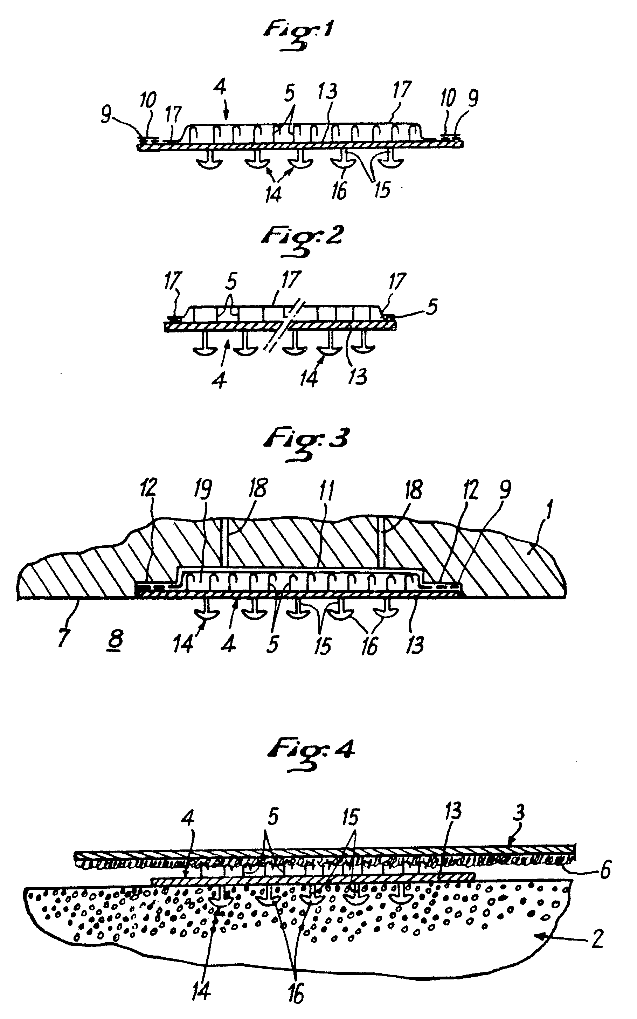

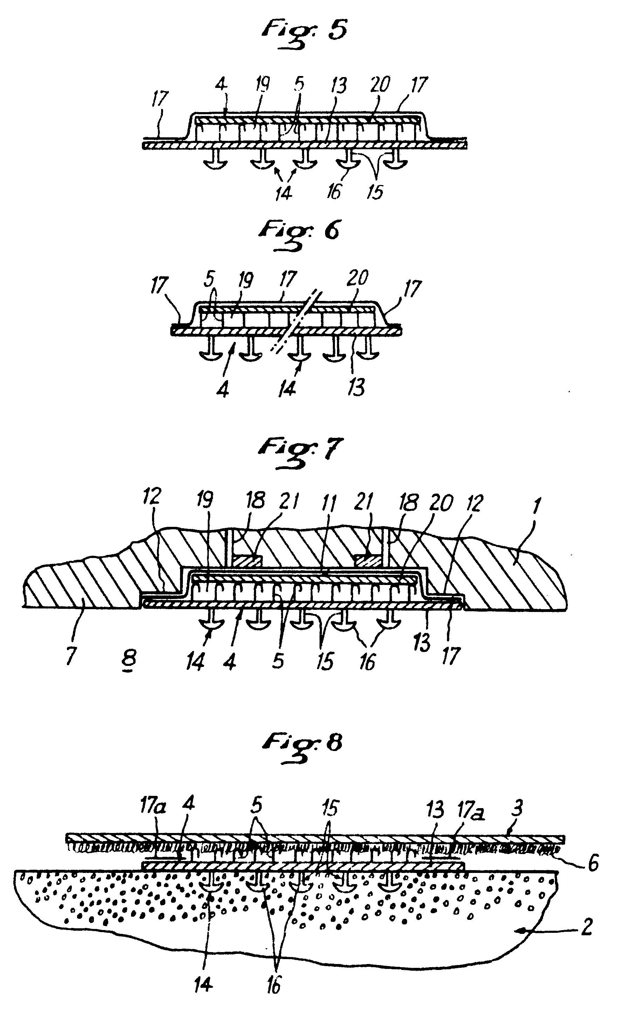

On a montré aux Figs. 3 et 7 une partie d'un moule 1, par exemple en aluminium, destiné à la fabrication d'un article moulé 2, montré en partie aux Figs. 4 et 8. Cet article est, dans le mode d'application préféré de l'invention, une assise ou un dossier en mousse depolyuréthane, du type polyéther, pour siège de véhicule.

L'article est destiné à recevoir un revêtement 3, (Figs. 4 et 8), par exemple une housse de siège dans l'application considérée. L'article moulé 2 retient le revêtement 3 par l'intermédiaire d'une bande accrochante 4 qui est assujettie fixement à l'article moulé 2 et qui, sur sa face tournée vers le revêtement 3, porte des éléments d'accrochage 5, par exemple en forme de crochets, destinés à coopérer avec le verso du revêtement 3 qui présente, à cet effet, une structure 6 fibreuse ou pelucheuse, par exemple du type jersey gratté formant des boucles.

De façon connue, la bande 4 est assujettie à l'article moulé 2, sur la face extérieure de celui-ci, lors de l'opération de moulage elle-même. Pour cela, comme montré à la Fig. 3, la bande 4 est provisoirement fixée sur la face intérieure 7 de la cavité de moulage 8 ménagée dans le moule 1. Pour une telle liaison, par exemple, la bande 4, sur sa face extérieure portant les éléments d'accrochage 5, présente deux zones marginales longitudinales démunies d'éléments d'accrochage et portant une enduction adhésive 9 (Fig. 1-4) protégée par une pellicule 10 destinée à être enlevée lors du collage de la bande 4 sur la face intérieure 7 du moule. Comme décrit ultérieurement à propos du mode de réalisation des Figs. 5 à 8, la bande 4 peut être retenue par voie magnétique à l'aide d'aimants prévus dans la paroi du moule.

Pour la réception de la bande 4, le moule 1 présente une cavité 11 (Figs. 3 et 7) de réception des éléments d'accrochage 5 et, éventuellement, de part et d'autre de cette cavité, deux petites cavités latérales (12) pour la réception des zones marginales de la bande 4, ces zones, si elles sont encollées, étant dégagées par enlèvement des pellicules de protection 10. La profondeur de la cavité ou gorge principale 11 est telle que les éléments d'accrochage 5 peuvent venir porter contre son fond et que, si on prévoit les cavités latérales 12, la face de la semelle 13 opposée à celle qui porte les éléments d'accrochage affleure la face intérieure du moule 1 ; les cavités ou gorges latérales 12 ont une profondeur qui correspond sensiblement à l'épaisseur de la semelle 13. De la sorte, la face de la semelle 13 opposée à celle qui porte les éléments d'accrochage 5 prolonge la surface intérieure 7 sans solution de continuité ; de plus, la bande 4 est maintenue en appui contre le moule 1, d'une part, par les zones latérales en appui dans les cavités 12 et, d'autre part, le cas échéant, au centre par les éléments d'accrochage 5 en appui contre le fond de la cavité 11. Ainsi, lors du moussage du produit de moulage, la pression de ce produit qui s'exerce sur la bande 4 ne provoque aucune déformation de celle-ci.

Du fait que la face de la semelle 13 tournée vers l'intérieur du moule est au niveau de la face intérieure 7 de celui-ci, cette semelle est en saillie, d'une distance égale à son épaisseur, sur l'article fini 2, comme montré aux Figs. 4 et 8.

Pour assurer une adhérence parfaite de la bande 4 avec le produit de moulage, on prévoit, de façon connue, des éléments d'ancrage 14 qui font saillie de la semelle 13, vers l'intérieur du moule, sensiblement à angle droit par rapport à la semelle. Chaque élément d'ancrage comporte une tige ou pied 15 dont l'extrémité libre, éloignée de la semelle 13, porte une tête élargie 16. La tête 16 peut avoir toute forme appropriée.

En variante, les éléments d'ancrage 14 pourraient être remplacés par toute structure appropriée, par exemple un jersey, grillage ou analogue facilitant l'ancrage du produit de moulage.

Pour éviter que, pendant le moulage, le produit de moulage, quand il est encore à l'état liquide, pénètre entre les éléments d'accrochage 5 et s'y fixe en diminuant ainsi le pouvoir accrochant de ceux-ci, on prévoit, selon l'invention, une fine pellicule de protection continue 17 (Figs. 1 à 3 et 5 à 8) qui recouvre les éléments d'accrochage et qui s'étend entre les zones marginales de la bande et sur toute la longueur de celle-ci.

La pellicule 17 peut être assujettie à la semelle 13, sur les zones marginales longitudinales, par tout moyen approprié, par exemple par collage à l'aide d'un adhésif d'apport ou par soudage, notamment aux ultrasons avec écrasement des éléments d'accrochàge dans les zones de collage. On utilisera de préférence cette dernière technique qui permet d'écraser une ou deux rangées d'éléments d'accrochage pendant le soudage lui-même pour la fixation de la pellicule sur la semelle. Sur les petits côtés, on peut se dispenser de prévoir un adhésif pour coller la bande sur le moule, en raison de la faible largeur et de la raideur de la semelle. Mais on pourrait aussi, par exemple pour des bandes larges, araser la semelle pour enlever quelques rangées d'éléments d'accrochage 5 et fixer la bordure de la pellicule 17 comme sur les grands côtés.

Dans la réalisation des Figs. 1 à 4, la pellicule 17 s'arrête à distance des bords longitudinaux extrêmes de la semelle 13, de manière à dégager une bordure libre pour l'adhésif 9 et sa pellicule de protection 10.

Suivant la variante des Figs. 5 à 8, dans laquelle la pellicule 17 s'étend jusqu'au contour extérieur de la semelle, la bande 4 n'est pas collée au moule 1 mais est retenue par voie magnétique, comme décrit ci-après.

Suivant une caractéristique de l'invention, la pellicule 17 est en une matière qui se dégrade physiquement et chimiquement à une température supérieure à celle à laquelle le produit de moulage est stabilisé physiquement et chimiquement.

Par exemple, dans le cas où l'article moulé 2 est en mousse de type polyéther, obtenue par un procédé dit à froid, dans lequel la mousse est stabilisée à partir d'environ 50°C, on peut utiliser une pellicule 17 en polyoléfine, notamment un polyéthylène souple ou rigide, qui se dégrade à partir de 100°C, ou encore un acétate de cellulose qui se dégrade à partir de 60°C.

L'épaisseur de la pellicule 17 est très faible, de l'ordre de quelques centièmes de millimètre, par exemple 202/100 mm.

Avant son insertion dans le moule 1 (Figs. 1 et 2) la bande 4 porte la pellicule 17 qui enferme et protège les éléments d'accrochage 5, à la manière d'une enveloppe ou d'un cocon.

Quand la bande 4, avec sa pellicule 17, est placée dans le moule (Fig. 3), elle y est retenue provisoirement par l'adhésif 9, ou tout moyen équivalent, les éléments d'accrochage 5 étant recouverts par la pellicule 17 et s'étendant dans la cavité 11, éventuellement munie d'évents 18.

Pendant le processus de moulage, le produit liquide de moulage est introduit dans la cavité de moulage 8 et, à mesure que la température augmente, sous l'effet d'un chauffage commandé, il se stabilise graduellement, à la fois dans sa forme et dans sa structure chimique. Tant qu'il est liquide ou plus ou moins visqueux, c'est-à-dire à température relativement basse, la pellicule 17 reste intacte, de même que sa liaison avec la semelle 13, et interdit toute pénétration du produit dans l'espace 19 fermé qu'elle définit avec la semelle 13 et qui renferme et protège les éléments d'accrochage 5. Ces derniers sont ainsi protégés tant que le produit de moulage est fluide. A mesure que la température continue à croître, par commande extérieure, la matière de la pellicule 17 commence alors à se dégrader. Etant donné la faible épaisseur de la pellicule 17, cette dégradation se manifeste par une rétraction, phénomène en lui-même connu, qui donne naissance à un volume de matière extrêmement faible. Cette matière de dégradation, même si elle se dépose totalement sur les éléments d'accrochage 5, est d'un volume très faible, incapable d'encrasser suffisamment ceux-ci pour en diminuer de façon appréciable ou significative le pouvoir accrochant.

A la fin du processus de moulage, la pellicule 17 est au moins partiellement et en général totalement dégradée et détruite, les produits de dégradation s'étant déposés, pour leur partie solide, sur la semelle 13, sur les éléments d'accrochage 5 et sur la surface de la cavité 11, de sorte que, au démoulage, les éléments 5 sont complètement dégagés et peuvent ultérieurement recevoir le revêtement 3 sans aucune opération supplémentaire et coûteuse de nettoyage.

Ainsi, grâce à l'invention qui prévoit la pellicule 17 constituant une enveloppe fermée et étanche, on protège en toute certitude les éléments d'accrochage 5 contre un encrassement par le produit de. moulage ; suivant une caractéristique particulière, cette pellicule se détruit automatiquement par effet thermique après que le produit de moulage s'est stabilisé.

Mais, suivant une autre conception, la matière de la pellicule de protection 17 pourrait ne pas être affectée pendant le moulage, la destruction de cette pellicule se faisant ultérieurement par voie chimique, mécanique ou thermique. Dans ce dernier cas, on pourrait par exemple soumettre l'article moulé fini 2, portant la bande 4 avec sa pellicule 17, à un chauffage superficiel bref et intense, notamment à la flamme, par exemple pour le traitement de l'article 2 en surface, simultanément à la destruction thermique de la pellicule 17.

Suivant la variante représentée aux Figs. 5 à 8, on place dans l'espace 19, entre le sommet des éléments d'accrochage 5 et la pellicule 17, un feuillard 20 relativement rigide. Ce feuillard a la même largeur (Fig. 5) et la même longueur (Fig. 6) que la partie de la semelle 13 portant des éléments d'accrochage 5. Ce feuillard est par exemple en feuille métallique de quelques dizièmes de millimètre d'épaisseur. Avantageusement, il est en un matériau magnétique, par exemple en tôle à base de fer, pour pouvoir être attiré par des aimants 21 noyés dans le fond de la cavité 11 du moule 1. On assure ainsi le maintien en place de la bande 4 pendant le moulage (Fig. 7).

Le feuillard 20, outre son rôle éventuel de moyen de maintien de la bande dans la cavité 11, donne à l'ensemble composite constitué par la bande 4 proprement dite et la pellicule 17 une raideur facilitant la mise en place de cet ensemble dans le moule 1. Par ailleurs, après l'opération de moulage, il facilite le détachement de la pellicule 17 d'avec la bande 4 ancrée dans l'article moulé 2.

Le détachement de la pellicule 17 peut se faire soit par décollement des zones marginales, soit par arrachement, soit encore par découpe de la pellicule. On a recours au décollement si l'adhérence entre la pellicule 17 et les zones marginales de la semelle 13 n'est pas trop forte ; on a recours à l'arrachement s'il importe peu que subsiste éventuellement, sur chacune des zones marginales longitudinales de la semelle, une languette 17a (Fig. 8) correspondant au reliquat non enlevé de la pellicule ; dans les deux cas ci-dessus, après que la pellicule 17 a été entaillée sur l'un des petits côtés de la bande 4, on saisit à la main les bords superposés du feuillard et de la pellicule et on tire l'ensemble en le soulevant progressivement, à la manière d'un pelage, ce qui provoque l'enlèvement de la pellicule, avec ou sans les parties marginales de la pellicule initialement collées à la semelle 13. Dans ces opérations, les bords du feuillard constituent des bords d'appui favorisant le décollement. Dans le cas d'une division de la pellicule, les bords longitudinaux du feuillard constituent en quelque sorte deux arêtes d'appui ou de coupe le long ou près desquelles s'effectue l'arrachement. Dans le troisième cas, on peut passer une lame coupante en s'appuyant sur les bords longitudinaux du feuillard, ou encore au voisinage immédiat des parties marginales collées de la pellicule pour obtenir une séparation nette ; après la découpe, il subsiste les languettes 17a à bords nets ; pour les petits côtés de la bande, on peut procéder de même.

Avant son insertion dans le moule 1 (Figs. 1 et 2), la bande 4 porte la pellicule 17 qui enferme et protège les éléments d'accrochage 5, à la manière d'une enveloppe ou d'un cocon, dans l'espace fermé 19.

Quand la bande 4, avec sa pellicule 17, est placée dans le moule (Fig. 7), elle y est retenue provisoirement par l'adhésif ou les aimants 21, les éléments d'accrochage 5 étant recouverts par la pellicule 17 et s'étendant dans la cavité 11, éventuellement munie d'évents 18.

Pendant le processus de moulage, le produit liquide de moulage est introduit dans la cavité de moulage 8 et, à mesure que la température augmente, sous l'effet d'un chauffage commandé, il se stabilise graduellement, à la fois dans sa forme et dans sa structure chimique. Pendant le moulage, la pellicule 17 interdit toute pénétration du produit dans l'espace 19. Les éléments d'accrochage 5 sont ainsi protégés contre la pénétration du liquide de moulage.

Bien entendu, la pellicule 17 est choisie en une matière résistant aux températures de moulage.

A la fin de l'opération de moulage, l'article 2, portant la bande 4 et la pellicule 17, est sorti du moule 1, après quoi on enlève la pellicule comme indiqué ci-dessus.

## Revendications

1. Bande d'accrochage destinée à être fixée, en cours de moulage, sur un article à mouler (2), cette bande (4) comportant une semelle (13) dont une face porte des éléments d'accrochage (5) tournés vers l'extérieur du moule (1), et la bande (4) prenant appui sur la surface intérieure (7) du moule le long d'une zone marginale périphérique dépourvue d'éléments d'accrochage, caractérisée par le fait qu'elle porte, entre la surface intérieure (7) du moule (1) et sa semelle (13) portant lesdits éléments d'accrochage (5), une fine pellicule provisoire de protection continue (17) qui recouvre les éléments d'accrocbage (5) et qui s'étend jusqu'à ladite zone marginale pour définir un espace fermé et étanche (19) de protection desdits éléments (5) pendant le moulage.

2. Bande selon la revendication 1, caractérisée par le fait que la pellicule (17) est collée à l'aide d'un adhésif d'apport (9) ou par soudage, notamment aux ultrasons.

3. Bande selon l'une des revendications 1 et 2, caractérisée par le fait qu'elle est de forme allongée et que, sur ses deux petits côtés terminaux, elle reçoit et retient le bord correspondant de la pellicule de protection, les éléments d'accrochage étant, dans cette zone, supprimés entre la semelle et ladite pellicule.

4. Bande selon l'une des revendications 1 à 3, caractérisée par le fait que, au moins en direction longitudinale, le bord de la pellicule de protection (17) est en retrait par rapport au bord extrême de ladite semelle de la bande de manière que ladite face puisse être collée directement sur la surface intérieure du moule.

5. Bande selon l'une des revendications 1 à 4, caractérisée par le fait que la pellicule provisoire de protection (17) est collée par ses bords au moins sur les zones marginales longitudinales de la face de la semelle portant les éléments d'accrochage, ces zones étant exemptes desdits éléments (5) et la pellicule (17) pouvant être simplement détachée de ladite face après le moulage pour dégager les éléments d'accrochage (5).

6. Bande selon l'une des revendications 1 à 5, caractérisée par le fait que, entre la partie centrale non collée de la pellicule (17) et le sommet des éléments d'accrochage (5) qu'elle recouvre, est prévu un feuillard (20) relativement rigide.

7. Bande selon la revendication 6, caractérisée par le fait que le feuillard (20) est en métal magnétique pour coopérer avec des aimants (21) prévus dans la paroi du moule (1) en vue d'assurer le maintien magnétique de la bande (4) dans le moule.

8. Bande selon l'une des revendications 6 et 7, caractérisée par le fait que le feuillard (20) à la même largeur et la même longueur que la partie de la semelle (13) qui porte les éléments d'accrochage (5).

9. Bande selon l'une des revendications 6 à 8, caractérisée par le fait que les bords longitudinaux du feuillard (20) constituent des arêtes d'appui pour le décollement, la découpe ou le déchirement de la pellicule (17) après le moulage.

10. Procédé pour la fixation, en cours de moulage, de la bande (4) selon l'une des revendications 1 à 9 sur un article à mouler (2), caractérisé par le fait qu'il consiste à placer dans la cavité de moulage (8) la bande (4) équipée de la pellicule de protection (17), à réaliser l'opération de moulage à une température qui n'affecte pas la pellicule de protection (17), et à supprimer celle-ci après que le produit de moulage s'est stabilisé chimiquement et physiquement.

11. Procédé selon la revendication 10, caractérisé par le fait que la pellicule de protection (17) est en une matière qui se dégrade à une température supérieure à celle à partir de laquelle le produit de moulage se stabilise.

12. Procédé selon la revendication 11, caractérisé par le fait qu'on chauffe progressivement pendant le moulage, de sorte que, tant que le produit de moulage est encore fluide, il ne peut s'insérer entre ladite semelle (13) de la bande (4) et la pellicule de protection (17) non dégradée et que, après que le produit s'est stabilisé, la pellicule (17) se dégrade et disparaît au moins partiellement sous l'effet de l'augmentation de température pour découvrir lesdits éléments d'accrochage (5).

13. Procédé selon la revendication 11, caractérisé par le fait que la pellicule de protection (17) est détruite après que l'article (2) a été sorti du moule (1), par un chauffage vif et bref, notamment à la flamme.

14. Procédé selon l'une des revendications 12 et 13, caractérisé par le fait que le produit de moulage est une mousse obtenue par la technique dite à froid, notamment du type polyéther.

15. Procédé selon l'une des revendications 11 à 14, caractérisé par le fait que la pellicule de protection (17) appartient au groupe constitué par les polyoléfines, notamment un polyéthylène souple ou rigide, et l'acétate de cellulose.

16. Procédé selon l'une des revendications 11 à 15, caractérisé par le fait que l'épaisseur de la pellicule de protection (17) est de l'ordre de quelques centièmes de millimètres, par exemple 2/100 mm, pour que la dégradation de la pellicule donne naissance à un très faible volume de produits de dégradation.

17. Procédé selon la revendication 10, caractérisé par le fait que la pellicule de protection (17) est détachée de la bande (4) après que l'article a été sorti du moule.

18. Procédé selon la revendication 17, caractérisé par le fait que le détachement de la pellicule (17) est réalisé par décollement.

19. Procédé selon la revendication 17, caractérisé par le fait que le détachement de la pellicule (17) est réalisé par division de celle-ci, notamment par découpe ou par déchirement pour que subsiste dans chaque zone longitudinale une languette (17a) de pellicule collée.

20. Procédé selon la revendication 19, caractérisé par le fait que le détachement de la pellicule (17) est réalisé en prenant appui sur les bords du feuillard (20) selon l'une des revendications 6 à 9.

21. Procédé selon l'une des revendications 10 à 20, caractérisé par le fait que le bord périphérique de la pellicule de protection (17) est assujetti de façon continue, par exemple par collage ou soudage, notamment ultrasonique, sur la zone marginale de la semelle (13) de la bande (4).


**Patentansprüche**

1. Befestigungsband, welches auf einem Gegenstand (2) bei dessen Formung befestigt wird, mit einem Gurt (13), welcher auf einer Seite gegen die Formaußenseite gerichtete Verankerungselemente (5) aufweist und sich auf der Innenfläche (7) der Form über die Länge einer Umfangsrandzone abstützt, die frei ist von Verankerungselementen, dadurch gekennzeichnet, daß das Befestigungsband zwischen der Innenfläche (7) der Form (1) und seinem die Verankerungselemente (5) aufweisenden Gurt (13) einem dünnen, kontinuierlichen und provisorischen Schutzüberzug (17) trägt, welcher die Verankerungselemente (5) abdeckt und sich bis zur Randzone erstreckt, um einen geschlossenen und dichten Schutzraum (19) für die Elemente (5) während des Formvorganges zu bilden.

2. Band nach Anspruch 1, dadurch gekennzeichnet, daß der Überzug (17) mit Hilfe eines Klebers (9) oder durch Schweißen, insbesondere Ultraschallschweißen, aufgebracht ist.

3. Band nach einem der Ansprüche 1 und 2, dadurch gekennzeichnet, daß das Band von langgestreckter Form ist und daß das Band auf seinen beiden schmalen Endseiten den entsprechenden Rand des Schutzüberzugs aufnimmt und hält, wobei die Verankerungselemente in dieser Zone zwischen dem Gurt und dem Überzug beseitigt sind.

4. Band nach einem der Ansprüche 1 bis 3, dadurch gekennzeichnet, dar der Rand des Schutzüberzugs (17) mindestens in Längsrichtung gegenüber dem äußeren Rand des Gurts des Befestigungsbands derart zurückgezogen ist, daß diese Seite unmittelbar auf die Innenfläche der Form geklebt werden kann.

5. Band nach einem der Ansprüche 1 bis 4, dadurch gekennzeichnet, daß der provisorische Schutzüberzug (17) mit seinen Rändern mindestens auf den längs verlaufenden Randzonen der die Verankerungselemente tragenden Seite des Gurts verklebt ist, wobei diese Zonen frei von diesen Elementen (5) sind und der Schutzüberzug (17) einfach von dieser Seite nach der Formung zur Freigabe der Befestigungselemente (5) abnehmbar ist.

6. Band nach einem der Ansprüche 1 bis 5, dadurch gekennzeichnet, daß zwischen dem mittleren, nicht verklebten Abschnitt des Überzugs (17) und der Spitze der hiervon überdeckten Verankerungselemente (5) ein relativ starres Band (20) vorgesehen ist.

7. Band nach Anspruch 6, dadurch gekennzeichnet, daß das Band (20) aus einem magnetischen Metall besteht, um mit den in der Hand der Form (1) vorgesehenen Magneten (21) zwecks magnetischer Halterung des Befestigungsbands (4) in der Form zusammenzuwirken.

8. Band nach einem der Ansprüche 6 und 7, dadurch gekennzeichnet, daß das Band (20) dieselbe Breite und dieselbe Länge wie der Abschnitt des Gurts (13) aufweist, der die Verankerungselemente (5) trägt.

9. Band nach einem der Ansprüche 6 bis 8, dadurch gekennzeichnet, daß die längs verlaufenden Ränder des Bands (20) Stützkanten für das Ablösen, das Abschneiden oder das Abreißen des Überzugs (17) nach der Formgebung bilden.

10. Verfahren zur Befestigung eines Bandes (4) nach einem der Ansprüche 1 bis 9 auf einem Gegenstand (2) bei dessen Formung, dadurch gekennzeichnet, daß das mit einem Schutzüberzug (17) versehene Befestigungsband (4) in den Formhohlraum (8) gelegt, die Formung bei einer Temperatur durchgeführt wird, die den Schutzüberzug (17) nicht beeinträchtigt, und daß der Überzug beseitigt wird, nachdem der geformte Gegenstand chemisch und physikalisch stabilisiert ist.

11. Verfahren nach Anspruch 10, dadurch gekennzeichnet, daß der Schutzüberzug (17) aus einem Material besteht, welches bei einer Temperatur zerstört wird, welche größer als die Temperatur ist, bei dar der geformte Gegenstand sich stabilisiert.

12. Verfahren nach Anspruch 11, dadurch gekennzeichnet, daß man während des Formvorgangs progressiv soweit erwärmt, daß der Formgegenstand noch fluide ist und zwischen dem Gurt (13) des Befestigungsbands (4) und dem nichtzerstörten Schutzüberzug (17) nicht eindringen kann und daß, nachdem der Gegenstand stabilisiert worden ist, der Überzug (17) mindestens teilweise unter der Wirkung der Temperatur-erhöhung zerstört wird und verschwindet, um die Verankerungselemente (5) freizugeben.

13. Verfahren nach Anspruch 11, dadurch gekennzeichnet, daß der Schutzüberzug (17) nach Herausnahme des Gegenstands (2) aus der Form (1) durch starke und kurze Erwärmung, insbesondere unter Flamme, zerstört wird.

14. Verfahren nach einem der Ansprüche 12 und 13, dadurch gekennzeichnet, daß der Formgegenstand aus einem durch ein sogenanntes kaltes Verfahren erzielten Schaum, insbesondere Polyäther, besteht.

15. Verfahren nach einem der Ansprüche 11 bis 14, dadurch gekennzeichnet, daß der Schutzüberzug (17) der Gruppe zugehörig ist, die gebildet ist aus Polyolefinen, insbesondere einem weichen oder steifen Polyäthylen, und Zelluloseacetat.

16. Verfahren nach einem der Ansprüche 1 bis 15, dadurch gekennzeichnet, daß die Dicke des Schutzüberzugs (17) in der Größenordnung von einigen Hundertsteln mm, beispielsweise 2/100 mm, beträgt, so daß die Zerstörung des Überzugs bei einem sehr geringen Volumen an Zersetzungsprodukten stattfindet.

17. Verfahren nach Anspruch 10, dadurch gekennzeichnet, daß der Schutzüberzug (17) vom Befestigungsband (4) abgenommen wird, nachdem der Gegenstand aus der Form herausgenommen ist.

18. Verfahren nach Anspruch 17, dadurch gekennzeichnet, daß die Entfernung des Überzugs (17) durch Ablösenbewirkt wird.

19. Verfahren nach Anspruch 17, dadurch gekennzeichnet, daß die Entfernung des Überzugs (17) durch Abtrennen des Überzugs, insbesondere durch Abschneiden oder Abreißen bewirkt wird, so daß in jeder Längszone eine Languette (17a) von dem aufgeklebten Überzug bleibt.

20. Verfahren nach Anspruch 19, dadurch gekennzeichnet, daß die Entfernung des Überzugs (17) durch Abstützen auf den Rändern des Bands (20) nach einem der Ansprüche 6 bis 9 bewirkt wird.

21. Verfahren nach einem der Ansprüche 10 bis 20, dadurch gekennzeichnet, daß der Umfangsrand des Schutzüberzugs (17) in kontinuierlicher Heise, beispielsweise durch Verkleben oder Verschweißen, insbesondere Ultraschallschweißen, auf der Randzone des Gurtes (13) des Befestigungsbandes (4) befestigt wird.

## Claims

1. Gripping tape intended to be attached, during molding, to an article (2) to be molded, this tape (4) having a sole (13) of which one face is equipped with gripping elements (5) turned toward the outside of the mold (1), and the tape (4) laying against the inside surface (7) of the mold along a peripheral marginal area void of gripping elements, characterized in that it is fitted, between the internal surface (7) of the mold (1) and its sole (13) having said gripping elements (5), with a thin temporary continuous film (17) which covers said gripping elements (5) and which extends up to said marginal area to create a closed and sealed space (19) protecting said elements during molding.

2. Tape according to claim 1, characterized in that the film (17) is glued with an adhesive (9) or welded, more particularly ultrasonically.

3. Tape according to one of claims 1 and 2, characterized in that it has an elongated shape and that, on both of its short ends, it receives and holds the corresponding ends of the protective film, the gripping elements being, in this area, deleted between the sole and said film.

4. Tape according to one of claims 1 to 3, characterized in that, at least in the longitudinal direction, the edge of the protective film (17) is recessed with respect to the extreme edge of said sole of the tape so that said face may be glued directly to the inside surface of the mold.

5. Tape according to one of claims 1 to 4, characterized in that the temporary protective film (17) is glued by its edges at least in the longitudinal marginal areas of the face of the sole having said gripping elements, these areas being void of said elements (5) and the film (17) being capable of being simply removed from said face after molding to uncover the gripping elements (5).

6. Tape according to one of claims 1 to 5, characterised in that a relatively rigid shim (20) is provided, between the center area not glued of the film (17) and the top of the gripping elements (5) that it covers.

7. Tape according to claim 6, characterized in that the shim (20) is made of a magnetic metal to cooperate with magnets (21) provided into the wall of the mold (1) in order to insure the magnetic holding of the tape (4) into the mold.

8. Tape according to one of the claims 6 and 7, characterized in that the shim (20) has the same width and the same length as the portion of the sole having gripping elements (5).

9. Tape according to one of the claims 6 to 8, characterized in that the longitudinal sides of the shim (20) serve as support for unsticking, cutting or tearing of the film (17) after molding.

10. Attaching method, during the molding operation, of the tape (4) according to one of the claims 1 to 9, onto an article to be molded, characterized in that it comprises placing the tape (4) equipped with its protective film (17) into the molding cavity (8), proceeding with the molding operation at a temperature which does not affect the protective film (17), and suppressing the latter after the molding material has set chemically and physically.

11. Method according to claim 10, characterized in that the protective film (17) is made of a material which degrades at a temperature greater than that at which the molding material sets.

12. Method according to claim 11, characterized in that the temperature is progressively increased during molding, so that, as long as the molding product is still fluid, it cannot penetrate between said sole (13) of the tape (4) and the non-degraded protective film (17) and that, after the material has set, the film (17) degrades and disappears at least partially under the effect of the rise in temperature in order to uncover said gripping elements (5).

13. Method according to claim 11, characterized in that the protective film (17) is destroyed after the article (2) has been removed from the mold (1), by a high and brief heating, particularly by a flame.

14. Method according to one of claims 12 and 13, characterized in that the molding material is a foam of the cold setting type, particularly of the polyether type.

15. Method according to one of the claims 11 to 14, characterized in that the protective film (17) is of the polyolefin type, particularly a rigid or flexible polyethylene, and cellulose acetate.

16. Method according to one of the claims 11 to 15, characterized in that the thickness of the protective film (17) is in the order of a few hundredths of a millimeter, 2/100 mm for example, so that the degradation of the film creates but a very small volume of degradation matter.

17. Method according to claim 10, characterized in that the protective film (17) is detached from the tape (4) after the article has been removed from the mold.

18. Method according to claim 17, characterized in that the film (17) is detached by unsticking.

19. Method according to claim 17, characterized in that the film (17) is detached by dividing it, particularly by cutting or tearing, so that a small tongue (17a) of stuck film remains in each longitudinal area.

20. Method according to claim 19, characterized in that the film (17) is detached by taking support on the edges of the shim (20) according to one of claims 6 to 9.

21. Method according to one of the claims 10 to 20, characterized in that the peripheral edge of the protective film (17) is fastened in a continuous manner, by glueing or welding for example, particularly by ultrasonic, onto the marginal area of the sole (13) of the tape (4).

*Fig. 1*

*Fig. 2*

*Fig. 3*

*Fig. 4*

*Fig. 5*

*Fig. 6*

*Fig. 7*

*Fig. 8*